(19)

Europäisches Patentamt
European Patent Office
Office européen des brevets

(11) Numéro de publication: **0 035 926 B1**


(12) # FASCICULE DE BREVET EUROPEEN


(45) Date de publication du fascicule du brevet: **10.08.83**

(51) Int. Cl.³: **H 04 Q 11/04**

(21) Numéro de dépôt: **81400289.5**

(22) Date de dépôt: **24.02.81**


(54) **Système de commutation de signalisation dans un réseau de commutation temporelle, et réseau de commutation temporelle comportant un tel système.**


(30) Priorité: **11.03.80 FR 8005417**

(43) Date de publication de la demande: **16.09.81 Bulletin 81/37**

(45) Mention de la délivrance du brevet: **10.08.83 Bulletin 83/32**

(84) Etats contractants désignés: **BE DE LU**



(56) Documents cités:
FR-A-2 283 605
FR-A-2 295 664
FR-A-2 347 841
FR-A-2 365 922
FR-A-2 376 572
GB-A-2 007 942
GB-A-2 011 222

COLLOQUE INTERNATIONAL DE COMMUTATION, mai 1979, Paris, FR, SCHREINER et al.: «Utilisation de microprocesseurs dans les systèmes de commutation temporelle à grande capacité», pages 737-744
COLLOQUE INTERNATIONAL DE COMMUTATION, mai 1979, Paris, FR, LE PABIC et al.: «Utilisation des microprocesseurs dans les centraux de la gamme temporelle MT», pages 745-750



(73) Titulaire: **THOMSON-CSF TELEPHONE, 146, Boulevard de Valmy, F-92707 Colombes (FR)**

(72) Inventeur: **Athenes, Claude, THOMSON-CSF SCPI 173 bld. Haussmann, F-75360 Paris Cedex 08 (FR)**
Inventeur: **Salle, Jacques Edmond, THOMSON-CSF SCPI 173 bld. Haussmann, F-75360 Paris Cedex 08 (FR)**

(74) Mandataire: **Desperrier, Jean-Louis et al, THOMSON-CSF SCPI 173, Bld Haussmann, F-75379 Paris Cedex 08 (FR)**



(56) Documents cités:
COMMUTATION & TRANSMISSION, vol. 2, mars 1980, no. 1, Paris, FR, MAJOS et al.: «Un exemple de circuit intégré à la demande pour la commutation temporelle MICSPA», pages 17-26
COMMUTATION & TRANSMISSION, vol. 2, mars 1980, no. 1, Paris, FR, DARTOIS et al.: «Le centre de Transit MI 20», pages 55-68
INTERNATIONAL SWITCHING SYMPOSIUM, Octobre 1976, Kyoto, JP, AHAVA et al.: "ADS-A digital telephone network, specially adapted to an area with a relatively low subscriber density", pages 243-3-1 à 243-3-8
COLLOQUE INTERNATIONAL DE COMMUTATION, mai 1979, Paris, FR, MAWATARI et al.: «Un système de commutation pour circuits de transmission de données avec architecture de commande distribuée», pages 267-274
REVIEW OF THE ELECTRICAL COMMUNICATION LABORATORIES, vol. 28, no. 5-6, mai-juin 1980, Tokyo, JP, UCHIYAMA: "Digital data switching control system", pages 338-349



EP 0 035 926 B1



Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Système de commutation de signalisation dans un réseau de commutation temporelle, et réseau de commutation temporelle comportant un tel système

L'invention concerne un système de commutation de signalisation dans un réseau de commutation temporelle utilisé notamment dans les centraux téléphoniques.

Un réseau de commutation temporelle permet l'échange de communications entre des jonctions entrantes et des jonctions sortantes sur lesquelles les informations sont transmises en modulation par impulsions codées du MIC.

Selon les normes internationales du CCITT (avis G 732) une jonction de type MIC comporte des trames constituées par trente-deux intervalles de temps dont le premier IT0 et le dix-septième IT16 sont affectés à la signalisation et sont appelés voies de signalisation, et, dont les intervalles de temps IT1 à IT15 et IT17 à IT32 sont affectés à trente communications simultanées multiplexées et sont appelées voies de parole; chacun des intervalles de temps comprend un échantillon de huit éléments binaires. Les trames sont regroupées en multitrames qui comprennent chacune seize trames numérotées de 0 à 15 et l'IT0 de chaque trame comporte la signalisation de verrouillage de trame (avis G 732 § 2.3 et 2.4).

Les intervalles de temps IT16 sont affectés à la signalisation voie par voie relative aux communications selon le tableau suivant dans lequel les quatre premiers éléments de l'échantillon sont désignés par IT16 A et les quatre derniers par IT16 B.

| voie de parole | numéro de la voie de parole en code binaire | voie de signalisation associée | contenu de la voie de signalisation |
|---|---|---|---|
| IT 0 | 0 0000 | IT16 A trame 0 | 0000 |
| IT 1 | 0 0001 | IT16 A trame 1 | abcd |
| IT 2 | 0 0010 | IT16 A trame 2 | abcd |
| IT 15 | 0 1111 | IT16 A trame 15 | abcd |
| IT 16 | 1 0000 | IT16 B trame 0 | xyxx |
| IT 17 | 1 0001 | IT 16 B trame 1 | abcd |
| IT 30 | 1 1110 | IT16 B trame 14 | abcd |
| IT 31 | 1 1111 | IT16 B trame 15 | abcd |

x étant un élément de réserve fixé à 1 s'il n'est pas employé, y indiquant une perte de verrouillage de multitrame, a, b, c, d étant des éléments binaires de signalisation correspondant à chaque voie de parole (avis G 732 § 4). L'IT16 de la trame TR0 contient la signalisation de verrouillage de multitrame (0000 xyxx).

Dans les réseaux de commutation temporelle connus, la commutation des voies de parole est assurée par un réseau de connexion sous la commande d'une unité de commande centrale comportant au moins un calculateur et la commutation de la signalisation est assurée par une unité de signalisation ou signaleur qui comporte un microprocesseur travaillant sous la commande de l'unité centrale et qui est reliée au réseau de connexion par au moins une jonction de signalisation entrante JSe et une jonction de signalisation sortante JSs qui comportent toutes les voies de signalisation IT16 relatives aux voies de parole commutées dans le réseau de connexion.

Supposons que le contenu de l'IT2 de la jonction entrante Je4 soit commuté dans l'IT30 de la jonction sortante Js28 par le réseau de connexion, si l'on désire également commuter la signalisation il faut que le contenu de la voie de signalisation associée à l'IT2 et située dans l'IT16 A de la trame 2 de la jonction Je4 (voir tableau ci-dessus) soit transféré dans la voie de signalisation associée à l'IT30 et située dans l'IT16 B de la trame 14 de la jonction Js28.

Dans des réseaux de commutation temporelle plus récents comme on peut en trouver une description dans le document «Colloque international de commutation», mai 1979 Paris de Fr. Schreiner et al intitulé: «utilisation de microprocesseurs dans les systèmes de commutation temporelle à grande capacité», le système de signalisation comporte un processeur central qui traite l'information de signalisation du canal 16 de façon uniforme, il comporte également un contrôleur de signalisation qui contribue à réduire la charge du processeur central. La fonction du contrôleur de signalisation est de balayer cycliquement une mémoire vive comportant l'ensemble des données de signalisation, de détecter les changements d'état d'effectuer des contrôles pour valider les changements d'état. Ce contrôleur comporte une logique programmée qui effectue les fonctions les plus complexes à savoir l'assemblage des messages de changement d'état, l'analyse des ordres en provenance du processeur central et la génération de signaux pulsés. Le contrôleur comporte également une logique câblée qui effectue les tâches les plus simples et hautement répétives à savoir la lecture cyclique de la mémoire qui contient les données de signalisation, la détection des changements d'état, et le contrôle de persistance de ces changements d'état.

Le système selon l'invention permet de décharger le microprocesseur de l'unité de signalisation de la commutation des voies de signalisation au moyen d'une logique câblée, sans blocage au sens strict pour des capacités usuelles, avec un retard très faible et constant (sans distorsion de phase) et, sans recherche de chemin, conformément à la revendication 1.

Les objets et caractéristiques de la présente invention apparaîtront plus clairement à la lecture de la description suivante d'exemples de réalisation, la description étant faite en relation avec les dessins ci-annexés dans lesquels:

la fig. 1 représente schématiquement un réseau de commutation temporelle comportant un système de commutation de signalisation conforme à l'invention,

la fig. 2 représente un exemple de réalisation de système de commutation de signalisation dans un réseau comportant au plus 32 jonctions entrantes et 32 jonctions sortantes, avec une jonction de signalisation entrante et une jonction de signalisation sortante,

la fig. 3 représente l'organigramme de la logique de perte et reprise de verrouillage de multitrame, la fig. 4 représente un exemple de réalisation de système de commutation de signalisation dans un réseau comportant au plus 256 jonctions entrantes et 256 jonctions sortantes, avec huit jonctions de signalisation entrantes et huit jonctions de signalisation sortantes,

la fig. 5 représente un convertisseur série-parallèle qui est un exemple de réalisation du circuit d'entrée du système représenté à la fig. 4,

la fig. 6 représente un convertisseur série-parallèle qui est un exemple de réalisation du circuit de sortie du système représenté à la fig. 4.

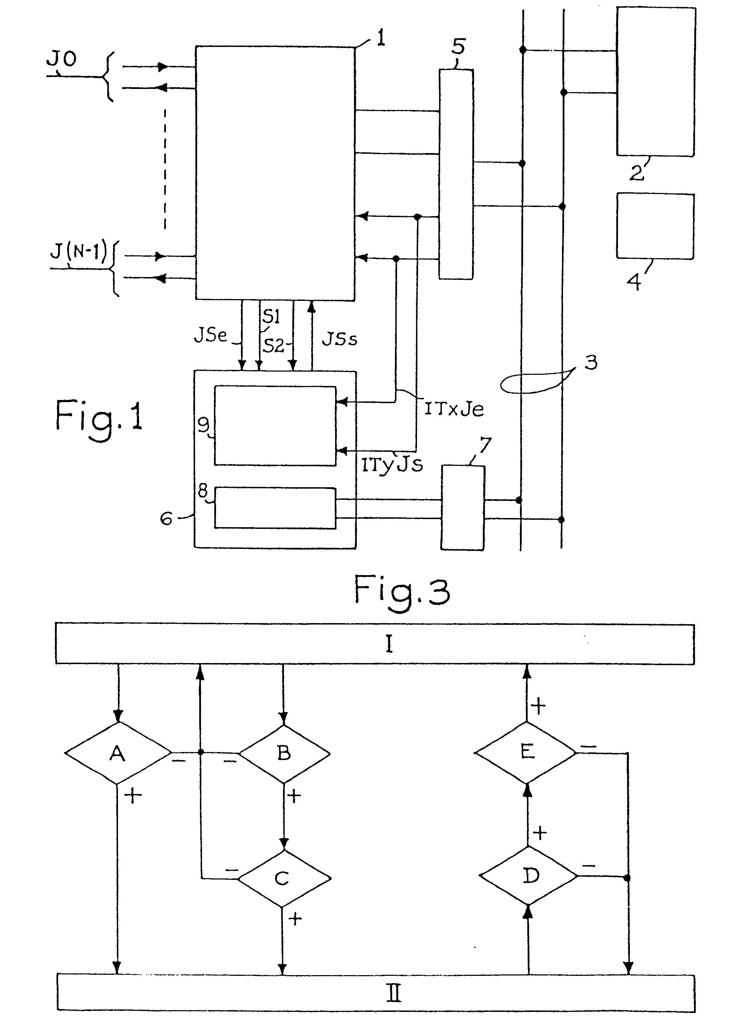

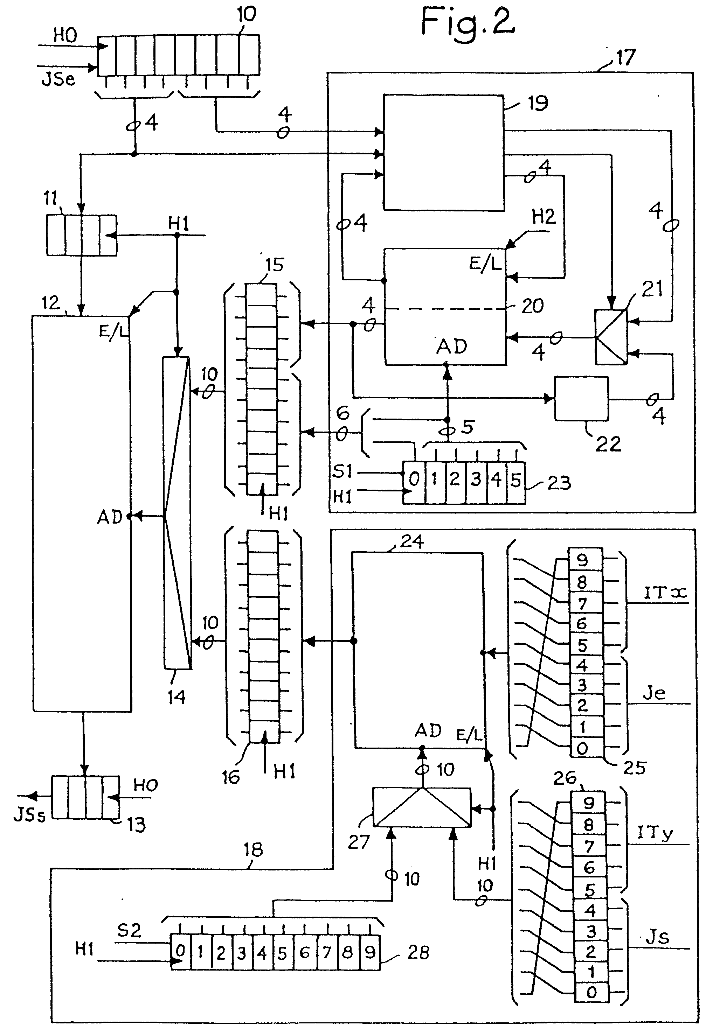

Tout d'abord, le réseau de commutation temporelle schématisé à la fig. 1 comprend essentiellement un réseau de connexion 1 comportant au moins un étage de commutation temporelle et éventuellement un ou des étages de commutation spatiale, réseau auquel sont reliées N jonctions J0 à J(N.1) qui comportent chacune une jonction entrante Je et une jonction sortante Js, une unité de commande 2 qui comporte au moins un calculateur qui est relié à un bus 3 d'accès aux périphériques, une horloge, et un périphérique programmé de marquage 5 qui est relié d'une part au bus 3 et d'autre part au réseau de connexion 1 auquel il fournit les adresses de deux voies en relation, premièrement celle d'une voie entrante ITxJe qui désigne la $x^{ième}$ voie de la $e^{ième}$ jonction entrante et deuxièmement celle d'une voie sortante ITyJs qui désigne la $y^{ième}$ voie de la $s^{ième}$ jonction sortante, x et y étant compris entre 0 et 31 et e et s étant compris entre 0 et N-1.

D'autre part, ce réseau de commutation temporelle comporte une unité de signalisation 6 qui est reliée au bus 3 via un périphérique programmé de signalisation 7 et qui est reliée au réseau de connexion via au moins une jonction de signalisation qui comprend une jonction entrante JSe et une jonction sortante JSs, le réseau de connexion lui fournissant un signal de synchronisation S1 relatif à JSe et un signal de synchronisation S2 relatif à JSs.

Cette unité de signalisation est constituée par un microcalculateur 8 qui assure les fonctions de signaleur, récepteur et envoyeur sous la commande de l'unité 2, et, conformément à l'invention, par un système 9 de commutation de signalisation réalisé au moyen d'une logique câblée qui reçoit les signaux JSe, S1 et S2 du réseau de connexion 1, qui lui fournit le signal JSs et qui reçoit les adresses ITxJe et ITyJs de deux voies en relation en provenance du périphérique programmé de marquage 5.

Le système de commutation de signalisation représenté à la fig. 2 correspond au cas où le nombre N de jonctions reliées au réseau est inférieur ou égal à 32; dans ce cas, une seule jonction de signalisation est suffisante pour contenir toutes les informations de signalisation. Pour cela, on fait correspondre au rang de la voie de la trame de la jonction de signalisation JSe (respectivement JSs) le rang de la jonction entrante (respectivement sortante). Ainsi, la jonction de signalisation JSe (respectivement JSs) contient toutes les informations de signalisation contenues dans les IT16 des jonctions entrantes (respectivement sortantes).

Par exemple, dans le cas de JSe, la première voie IT0 de la première trame TR0 de JSe contient l'échantillon de l'IT16 de la trame TR0 de la jonction entrante Je0, la seconde ou IT1 contient l'IT16 de TR0 de Je1, etc., l'IT31 contient l'IT16 de TR0 de Je31. Puis la seconde trame TR1 de JSe contient de même les IT16 des trames TR1 des jonctions Je0 à Je31 et ainsi de suite, jusqu'à la trente-deuxième trame TR31 de JSe qui contient les IT16 des trames TR31 des jonctions Je0 à Je31. On procède de même avec JSs.

Par ce procédé, les seize trames d'une jonction de signalisation, qui comprend 32×32 voies soit 512 voies, peuvent contenir jusqu'à 1024 informations de signalisation puisque chaque information de signalisation comporte quatre éléments binaires et que chaque voie comprend donc deux informations de signalisation.

Le système représenté à la fig. 2 comprend un registre 10 de huit éléments binaires à entrée série et sorties parallèles dont l'entrée reçoit le signal JSe de la jonction de signalisation entrante et dont l'entrée d'horloge reçoit le signal d'horloge H0 qui correspond au rythme de transmission des éléments binaires sur les jonctions et qui est égal à 2 MHz dans notre exemple.

Il comprend également un regsitre 11 de quatre éléments binaires à entrées parallèles et sorties parallèles dont les entrées sont reliées aux quatre premières sorties du registre 10 et dont l'entrée d'horloge reçoit un signal d'horloge H1 dont la fréquence est le quart de celle du signal d'horloge H0, c'est-à-dire 500 kHz dans notre exemple.

Ce registre 11 constitue le registre d'entrée de données d'une mémoire de signalisation 12 qui est une mémoire vive de 1024 mots de quatre éléments binaires, ce qui correspond à la capacité maximale de la jonction de signalisation. Les sorties de cette mémoire 12 sont reliées aux entrées d'un registre 13 de quatre éléments binaires à entrées parallèles et sortie série dont l'entrée d'horloge reçoit le signal H0 et dont la sortie fournit le signal JSs de la jonction de signalisation sortante.

D'autre part, le système comporte un multiplexeur d'adressage 14 de la mémoire de signalisation dont les sorties sont reliées aux entrées AD d'adressage de la mémoire 12, ces entrées AD étant au nombre de dix puisque la mémoire comprend 1024 mots. Les entrées du multiplexeur 14 qui correspondent à l'écriture de la mémoire de signalisation 12 sont reliées aux sorties d'un registre d'adresse d'écriture 15 et celles qui correspondent à la lecture aux sorties d'un registre d'adresse de lecture 16. Les registres 15 et 16 sont des registres de dix éléments binaires à entrées parallèles et sorties parallèles et l'entrée d'horloge de chacun d'eux reçoit le signal d'horloge H1. Les entrées du registre 15 sont reliées aux sorties d'un circuit d'adressage en écriture 17 et celles du registre 16 aux sorties d'un circuit d'adressage en lecture 18.

Le circuit d'adressage en écriture 17 comporte tout d'abord un circuit logique 19 de détection de perte et reprise de verrouillage de multitrame dont huit entrées sont reliées aux sorties du registre 10. D'autre part, il comporte une mémoire de rang de trame 20 qui est une mémoire vive de 32 mots de huit éléments binaires, chaque mot correspondant à l'une des 32 jonctions entrantes et étant subdivisé en deux parties, une première partie comprenant les quatre premiers éléments binaires qui correspond au rang de trame parmi les seize trames de la multitrame de chacune de ces jonctions, et une seconde partie comprenant les quatre derniers éléments binaires qui correspond à des indications concernant le verrouillage de multitrame, c'est-à-dire la synchronisation de multitrame.

Les quatre premières entrées de la mémoire de rang de trame 20 sont reliées aux sorties d'un multiplexeur 21 dont quatre parmi les huit entrées sont reliées à quatre sorties du circuit logique 19 et dont l'entrée de commande est reliée à une autre sortie du circuit logique 19. Les quatre premières sorties de la mémoire 20 sont reliées d'une part aux quatre entrées de plus fort poids du registre d'adresse d'écriture 15 et d'autre part aux entrées d'un circuit d'incrémentation 22 qui incrémente d'une unité le rang de trame codé sur quatre éléments binaires qu'il reçoit, et, dont les sorties sont reliées aux quatre autres entrées du multiplexeur 21.

Les quatre dernières entrées de la mémoire de rang de trame 20 sont reliées à quatre sorties du circuit logique 19 et les quatre dernières sorties sont reliées à quatre entrées de ce circuit logique 19.

Enfin le circuit d'adressage en écriture 17 comporte un compteur 23 à six éléments binaires numérotés de 0 à 5; d'une part, les six sorties du compteur 23 sont reliées aux six premières entrées du registre d'adresse d'écriture, d'autre part les sorties n° 1 à 5 sont reliées aux entrées AD d'adressage de la mémoire 20. Enfin l'entrée d'horloge du compteur 23 reçoit le signal H1 et l'entrée de remise à zéro le signal S1 de synchronisme avec la jonction entrante.

Le circuit d'adressage en lecture 18 comprend, tout d'abord, une mémoire d'adresse 24 qui est une mémoire vive de 1024 mots de dix éléments binaires et dont les sorties sont reliées aux entrées du registre d'adresse de lecture 16.

Un registre de mémorisation 25 de dix éléments binaires numérotés de 0 à 9 reçoit en provenance du périphérique programmé de marquage l'adresse ITxJe d'une voie entrante, les cinq éléments binaires de plus faible poids n° 0 à 4 donnant l'adresse d'une jonction entrante Je parmi trente-deux et les cinq éléments binaires de plus fort poids n° 5 à 9 donnant l'adresse d'une voie ITx parmi trente-deux sur cette jonction Je. La $i^{ème}$ sortie de ce registre 25 (avec $0 \leqq i \leqq 9$) est reliée à la $[(i+1) \text{ modulo } 10]^{ième}$ entrée de la mémoire d'adresse 24.

De même un registre de mémorisation 26 de dix éléments binaires numérotés de 0 à 9 reçoit en provenance du périphérique programmé de marquage l'adresse d'une voie sortante ITyJs en relation avec la voie entrante dont l'adresse est contenue dans le registre 25, les éléments binaires n° 0 à 4 donnant l'adresse d'une jonction sortante Js parmi trente-deux et les éléments binaires n° 5 à 9 donnant l'adresse d'une voie ITy parmi trente-deux sur cette jonction Js.

Les dix entrées AD d'adressage de la mémoire 24 sont reliées aux sorties d'un multiplexeur d'adressage 27. Les entrées du multiplexeur 27 qui correspondent à l'adressage en écriture de la mémoire 24 sont reliées aux sorties du registre 26 de telle sorte que la $i^{ième}$ sortie de ce registre soit connectée à la $[(i+1) \text{ modulo } 10]^{ième}$ entrée d'adressage.

Les entrées du multiplexeur 27 qui correspondent à l'adressage en lecture de la mémoire 24 sont reliées aux sorties d'un computer 28 de dix éléments binaires dont l'entrée d'horloge reçoit le signal H1, dont l'entrée de remise à zéro reçoit le signal S2 de synchronisme avec la jonction sortante, ce signal S2 provenant du réseau de connexion, et dont les sorties sont reliées aux entrées du multiplexeur 27 qui correspondent à l'adressage en lecture de la mémoire 24 de telle sorte que la $i^{ième}$ sortie du compteur ($0 \leqq i \leqq 9$) soit reliée à la $i^{ième}$ entrée d'adressage.

Enfin, les mémoires 12 et 24 ainsi que les multiplexeurs d'adressage associés 14 et 27 reçoivent chacun à leur entrée de commande d'écriture-lecture E/L le signal d'horloge H1 ce qui permet de partager chaque période de 2 µs en une demi-période de 1 µs pour l'écriture et une demi-période de 1 µs pour la lecture. De même, la mémoire de rang de trame 20 reçoit à son entrée de commande d'écriture-lecture E/L un signal H2 dont la fréquence est la moitié de celle du signal H1 que reçoit le compteur d'adressage 23, c'est-à-dire que la fréquence de H2 est 250 kHz dans notre exemple, de telle sorte que pour chaque adressage de la mémoire 20, on ait une demi-période de 2 µs pour l'écriture et une demi-période de 2 µs pour la lecture.

Le système représenté à la fig. 2 étant décrit on expose son fonctionnement.

Le système de commutation de signalisation conforme à l'invention consiste, tout d'abord, à écrire chaque information de signalisation dans une mémoire de signalisation à une adresse qui est constituée premièrement par quatre éléments binaires, qui donnent le rang de la trame à laquelle appartient l'information de signalisation sur JSe, deuxièmement par cinq éléments binaires qui donnent le numéro de l'intervalle de temps (ou voie) auquel appartient l'information de signalisation sur JSe, et, troisièmement par un élément binaire qui indique si l'information appartient à la partie A ou à la partie B de l'intervalle de temps. Ensuite, on lit les informations de signalisation contenues dans la mémoire de signalisation de façon à reconstituer une jonction de signalisation sortante JSs en se conformant aux indications du tableau de la page 2 et aux informations de correspondance fournies par le périphérique programmé de marquage.

Pour obtenir l'adresse de lecture adéquate par une simple logique câblée, on remarque dans le tableau de la page 2 que le numéro de voie de parole en code binaire donne à lui seul le numéro de la demi-partie et de la trame de IT16 associée. En effet, le premier élément binaire du numéro de la voie de parole en code binaire est égal à 0 ou 1 suivant que l'on associe la partie A ou la partie B de l'IT16 et les quatre derniers éléments binaires donnent en code binaire le numéro de la trame à laquelle appartient l'IT16 associée; en outre, étant donné la structure d'une jonction de signalisation (voir page 5, lignes 16 à 34), les informations de signalisation qui se rapportent à la $i^{\text{ième}}$ jonction entrante (respectivement sortante) sont situées dans les $i^{\text{ièmes}}$ intervalles de temps de la jonction de signalisation entrante (respectivement sortante).

Par conséquent, lors de la constitution de la jonction de signalisation sortante, pour obtenir l'information de signalisation qui doit être placée dans la trame n° pqrs dans l'intervalle de temps n° tuvwx dans la partie n° y de JSs (les numéros étant donnés en code binaire et les lettres p à y prenant les valeurs 0 ou 1), sachant que la voie sortante ITyJs d'adresse ypqrstuvwx est en relation avec la voie entrante d'adresse jabcdefghi, il faut et il suffit de fournir abcdefghij comme adresse de lecture de la mémoire de signalisation.

Le principe de fonctionnement du système de commutation de signalisation étant exposé, on décrit le fonctionnement des moyens d'application de ce principe.

Sur la jonction de signalisation entrante JSe les éléments binaires sont transmis au rythme de 2 MHz, le registre 10 effectue une conversion série-parallèle et il fournit à la fréquence H1 de 500 kHz (500 kHz est égale à 2 MHz divisé par quatre), c'est-à-dire toutes les deux microsecondes, des informations de signalisation comportant quatre éléments binaires en entrée de la mémoire de signalisation 12 via le registre 11.

Ces informations sont inscrites dans la mémoire de signalisation 12 sous la commande du signal d'écriture-lecture qui est le signal H1, ainsi au cours de chaque période de deux microsecondes, une microseconde est consacrée à l'écriture et l'autre à la lecture. Ces informations sont inscrites à l'adresse d'écriture définie dans l'exposé du principe ci-dessus, cette adresse étant élaborée par le circuit d'écriture 17 et parvenant aux entrées AD d'adressage de 12 par l'intermédiaire du multiplexeur 14 et du registre 15 toutes les deux microsecondes, car 14 et 15 reçoivent le signal d'horloge H1 à 500 kHz.

Pour élaborer l'adresse d'écriture, le circuit d'écriture doit tout d'abord établir le rang de la trame concernée pour chaque jonction entrante, c'est pourquoi il comporte un circuit 19 de détection de perte et reprise de verrouillage de multitrame qui permet de détecter le début de multitrame grâce à l'IT16 de la trame TR0, qui contient le code de verrouillage de multitrame, et de constater les passages de l'état désynchronisé à l'état synchronisé.

La perte et la reprise du verrouillage de multitrame sont définies dans l'avis G 732 § 4.2.3 du CCITT et sont indiqués dans l'algorithme représenté à la fig. 3 dans lequel l'état I est l'état synchronisé et l'état II l'état désynchronisé.

Entant dans l'état synchronisé I, on pose la question A «les éléments binaires des IT16 d'un multitrame sont-ils tous égaux à zéro?»: si la réponse est négative (−) on est toujours synchronisé, par contre si la réponse est positive (+) on est passé de l'état synchronisé à l'état désynchronisé II.

Etant dans l'état synchronisé I, on pose la question B «l'IT16 d'une trame TR0 est-il différent de zéro?»: si la réponse est négative (−) on est toujours synchronisé, par contre si la réponse est positive (+) on pose la question C «l'IT16 de la trame TR0 suivante est-il différent de zéro?»: si la réponse est cette fois négative (−), on est toujours synchronisé, par contre si la réponse est à nouveau positive (+), on est passé de l'état synchronisé I à l'état désynchronisé II.

Etant dans l'état désynchronisé II, on pose la question D «l'IT16 d'une trame est-il différent de zéro?»: si la réponse est négative (−) on est toujours désynchronisé, si la réponse est positive (+) on pose la question E: «l'IT16 A de la trame suviante est-il égal à zéro?»: si la réponse est négative (−) on est toujours désynchronisé, si la réponse est positive (+) on est passé de l'état désynchronisé II à l'état synchronisé I.

Cet algorithme est réalisé par le circuit 19 associé à la deuxième partie de la mémoire 20, dont chaque mot correspond à une jonction entrante. Les quatre derniers éléments binaires des mots contenus dans la mémoire 20 ont les significations suivantes: le cinquième signifie «jonction

synchronisée ou non», le sixième signifie «l'IT16 d'une trame TR0 est différent de zéro ou non», le septième signifie «l'IT16 d'une trame est différent de zéro ou non», et le huitième donne la somme logique partielle des IT16 de la multitrame en cours.

La mémoire de rang de trame 20 est lue toutes les quatre microsecondes, puisque l'entrée de commande d'écriture-lecture reçoit le signal H2 de fréquence 250 kHz; d'autre part, étant donné l'adressage de cette mémoire 20, une même adresse est présente aux entrées AD de 20 pendant chaque période de quatre microsecondes qui se décompose en deux microsecondes consacrées à la lecture et deux microsecondes à l'écriture.

Chaque fois qu'une jonction entrante passe de l'état désynchronisé à l'état synchronisé la logique 19 procède, via le multiplexeur 21, à l'inscription du rang de trame dans la première partie de la mémoire 20 à l'adresse correspondant à cette jonction entrante.

En état synchronisé d'une jonction, après chaque lecture du rang de trame correspondant, on écrit à la même adresse le rang de trame qui vient d'être lu augmenté d'une unité par le circuit 22, le multiplexeur 21 étant positionné par la logique 19 de façon à présenter en entrée de la première partie de la mémoire 20 les signaux issus du circuit 22.

On établit donc ainsi la première partie de l'adresse d'écriture qui indique le rang de trame à l'aide de quatre éléments binaires. Les six autres éléments binaires de l'adresse d'écriture sont fournis par les sorties du compteur 23; d'une part, les sorties n° 1 à 5 donnent le rang de l'intervalle de temps présent en entrée sur JSe (le synchronisme étant assuré par le signal S1), c'est-à-dire étant donné la constitution de la voie de signalisation le rang de la jonction entrante, d'autre part la sortie n° 0 indique s'il s'agit de la première partie A ou de la seconde partie B de l'intervalle de temps.

Les informations de signalisation sont lues dans la mémoire de signalisation 12 pendant chaque demi-période d'une microseconde consacrée à la lecture. Ces informations sont lues à l'adresse de lecture définie dans l'exposé du principe ci-dessus, cette adresse étant élaborée par le circuit de lecture 18 et parvenant aux entrée AD d'adressage de 12 par l'intermédiaire du multiplexeur 14 et du registre 16, toutes les deux microsecondes, car 14 et 16 reçoivent le signal d'horloge H1 à 500 kHz.

Les moyens d'élaboration de l'adresse de lecture conforme au principe exposé ci-dessus, consistent à inscrire, dans la mémoire d'adresse 24, le mot abcdefghij correspondant à la voie entrante ITxJe d'adresse jabcdefghi et obtenu grâce au câblage particulier décrit ci-dessus entre les sorties du registre 25 contenant l'adresse de ITxJe et les entrées de la mémoire 24, à l'adresse pqrstuvwxy correspondant à la voie de jonction sortante ITyJs d'adresse ypqrstuvwx et obtenue grâce au câblage particulier décrit ci-dessus entre les sorties du registre 26 contenant l'adresse de ITyJs et les entrées du multiplexeur d'adressage qui correspondent à l'écriture.

Lorsque les informations de correspondance entre voies entrantes et voies sortantes sont ainsi inscrites dans la mémoire d'adresse 24, on constitue la voie de signalisation sortante en adressant en lecture la mémoire 24 par les signaux de sortie du compteur 28, en synchronisme avec le réseau de connexion grâce au signal S2.

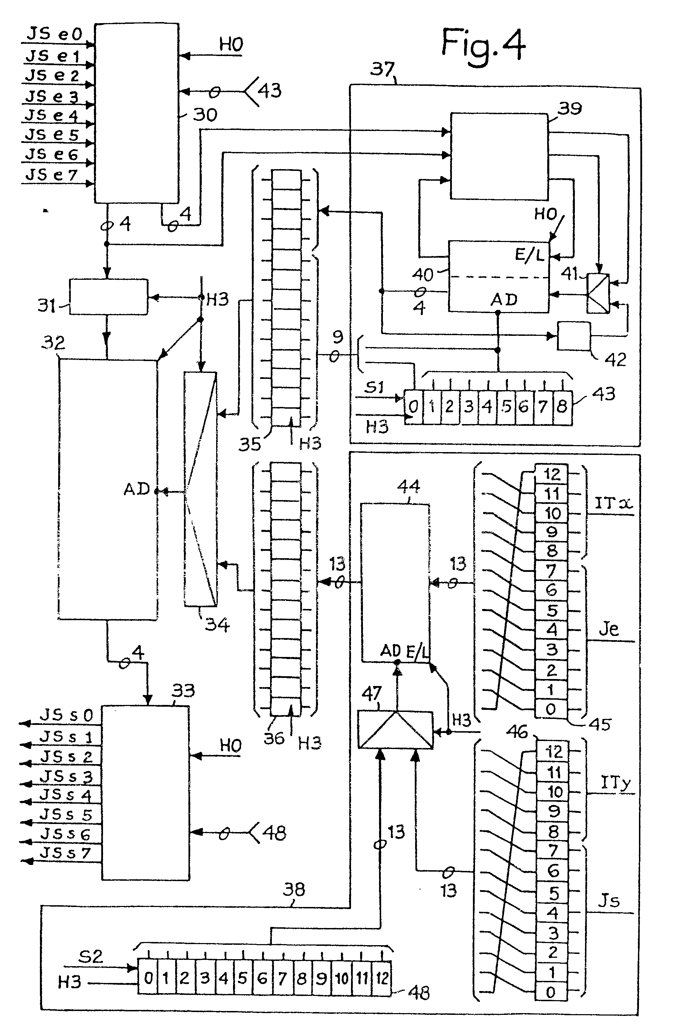

La fig. 4 représente un exemple de réalisation ayant le même principe que l'exemple de réalisation précédent, mais qui est adapté à un nombre N de jonctions entrantes et de jonctions sortantes supérieur à 32 et au plus égal à 256.

Les jonctions entrantes pouvant contenir jusqu'à huit fois plus (256 est égal à 8×32) d'informations de signalisation que dans l'exemple précédent, on utilise dans ce cas huit jonctions de signalisation, soit huit jonctions entrantes JSe0 à JSe7 et huit jonctions sortantes JSs0 à JSs7. Ces jonctions sont constituées de façon analogue à la jonction JSe, la jonction JSei (i = 0 à 7) contenant les informations de signalisation des jonctions entrantes Je [32i] à [32i+31] et la jonction JSsi (i = 0 à 7) contenant celles des jonctions sortantes Js [32i] à Js[32i+31]. La fig. 4 montre les adaptations qui permettent de passer de 32 jonctions à 256 jonctions.

Le système comporte un circuit d'entrée qui est un convertisseur série-parallèle 30 dont les entrées sont reliées aux jonctions de signalisation entrantes JSe0 à JSe7 et qui reçoit le signal d'horloge H0, un registre 31 identique au registre 11 de la fig. 2 dont les quatre entrées sont reliées à quatre sorties du convertisseur 30 et qui reçoit en entrées d'horloge un signal d'horloge H3 de fréquence 4 MHz huit fois plus grande que celle que reçoit le registre 21 puisque l'on a huit fois plus d'informations pendant un temps donné.

D'autre part, le système comporte une mémoire de signalisation de 8192 (8×1024) mots de quatre éléments binaires dont les entrées sont reliées aux sorties du registre 31, dont l'entrée de commande d'écriture-lecture E/L reçoit le signal H3, et, dont les sorties sont reliées aux entrées d'un convertisseur série-parallèle 33 dont les sorties fournissent les jonctions de signalisation sortantes JSs0 à JSs7 et qui reçoit le signal d'horloge H0.

Les treize entrées AD d'adressage de la mémoire de signalisation 32 sont reliées aux sorties d'un multiplexeur 34 dont l'entrée de commande reçoit le signal H3, dont les entrées qui correspondent à l'écriture sont reliées aux sorties d'un registre d'adresse d'écriture 35 de treize éléments binaires et dont les entrées qui correspondent à la lecture sont reliées aux sorties d'un registre d'adresse de lecture 36 de treize éléments binaires.

Les entrées du registre 35 sont reliées aux sorties d'un circuit d'adressage en écriture 37, celles du registre 36 sont reliées aux sorties d'un circuit d'adressage en lecture 38 et l'entrée d'horloge de chacun de ces registres reçoit le signal d'horloge H3.

Le circuit d'adressage en écriture 37 comporte un circuit logique 39 de détection de perte et reprise de verrouillage de multitrame, identique au circuit logique 19, dont huit entrées sont reliées aux sorties du registre 30. D'autre part, il comporte une mémoire de rang de trame 40 qui est une mémoire vive de 256 (8×32) mots de huit éléments binaires dont chaque mot correspond à l'une des 256 jonctions entrantes dont l'entrée de commande d'écriture-lecture E/L reçoit le signal d'horloge H0, un multiplexeur 41, identique au multiplexeur 21, et un circuit d'incrémentation 42, identique au circuit 22, les liaisons entre les éléments 39, 40, 41 et 42 étant identiques à celles entre les éléments 19, 20, 21 et 22.

Le circuit 37 comporte, enfin, un compteur 43 à neuf éléments binaires numérotés de 0 à 8; d'une part, les neuf sorties du compteur 43 sont reliées aux neuf entrées de plus faible poids du registre d'adresse d'écriture, d'autre part, les sorties n° 1 à 8 sont reliées aux entrées AD d'adressage de la mémoire 40. L'entrée d'horloge du compteur 43 reçoit le signal H3 et l'entrée de remise à zéro le signal S1 de synchronisme avec les jonctions entrantes.

Le circuit d'adressage en lecture 38 comprend, tout d'abord, une mémoire d'adresse 44 qui est une mémoire vive de 8192 (8×1024) mots de treize éléments binaires et dont les sorties sont reliées aux entrées du registre d'adresse de lecture 36.

Un registre de mémorisation 45 de treize éléments binaires numérotés de 0 à 12 reçoit en provenance du périphérique programmé de marquage l'adresse d'une voie entrante ITxJe les huit éléments binaires de plus faible poids n° 0 à 7 donnant l'adresse d'une jonction entrante Je parmi deux cent cinquante-six et les cinq éléments binaires de plus fort poids donnent l'adresse d'une voie ITx parmi trente-deux sur cette jonction Je. La $i^{ième}$ sortie de ce registre 45 (avec $0 \leqq i \leqq 12$) est reliée à la $[(i+1) \text{ modulo } 13]^{ième}$ entrée de la mémoire d'adresse 44.

De même un registre de mémorisation 46 de treize éléments binaires numérotés de 0 à 12 reçoit en provenance du périphérique programmé de marquage l'adresse d'une voie sortante ITyJs en relation avec la voie entrante dont l'adresse est contenue dans le registre 45, les huit éléments binaires de plus faible poids n° 0 à 7 donnant l'adresse d'une jonction sortante Js parmi deux cent cinquante-six et les cinq éléments binaires de plus fort poids n° 8 à 12 donnant l'adresse d'une voie ITy parmi trente-deux sur cette jonction Js.

Les treize entrées AD d'adressage de la mémoire 44 sont reliées aux sorties d'un multiplexeur d'adressage 47. Les entrées du multiplexeur d'adressage 47 qui correspondent à l'adressage en écriture sont reliées aux sorties du registre 26 de telle sorte que la $i^{ième}$ sortie de ce registre 46 (avec $0 \leqq i \leqq 12$) soit connectée à la $[(i+1) \text{ modulo } 13]^{ième}$ entrée d'adressage.

Les entrées du multiplexeur 47 qui correspondent à l'adressage en lecture de la mémoire 44 sont reliées aux sorties d'un compteur 48 de treize éléments binaires dont l'entrée d'horloge reçoit le signal H3, dont l'entrée de remise à zéro reçoit le signal 52 de synchronisme avec les jonctions sortantes et dont les sorties sont reliées aux entrées du multiplexeur 47 qui correspondent à l'adressage en lecture de telle sorte que la $i^{ième}$ sortie du compteur soit reliée à la $i^{ième}$ entrée d'adressage (avec $0 \leqq I \leqq 13$).

Enfin, l'entrée de commande d'écriture-lecture E/L de la mémoire 44 et l'entrée de commande du multiplexeur 47 reçoivent le signal d'horloge H3.

Le fonctionnement de l'exemple de réalisation représenté à la fig. 4 étant identique à celui de l'exemple de réalisation représenté à la fig. 2, on se contente de décrire les convertisseurs 30 et 33 qui seuls nécessitent des explications supplémentaires.

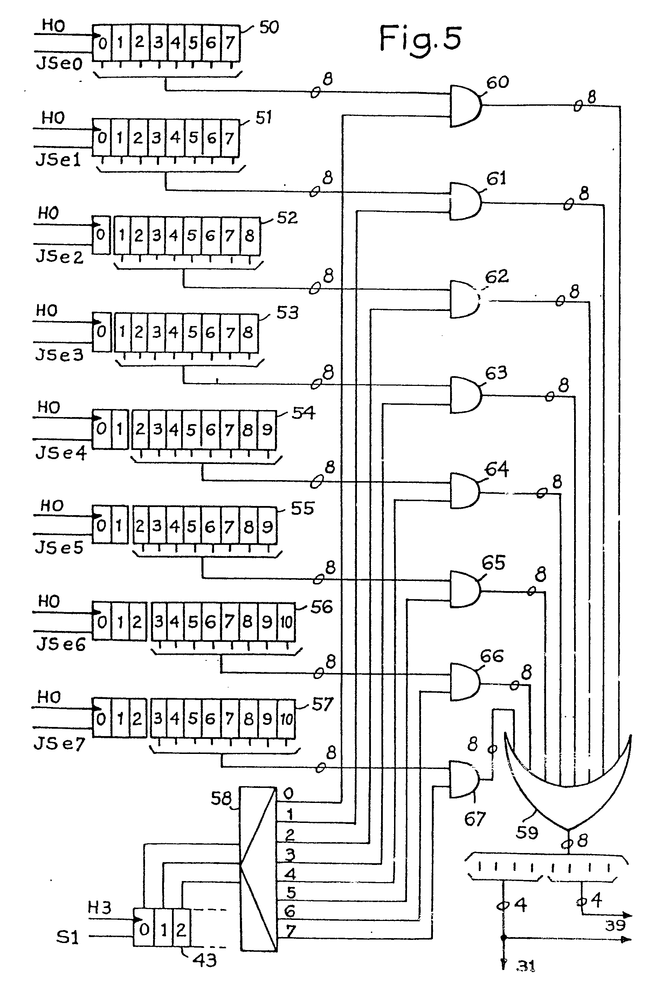

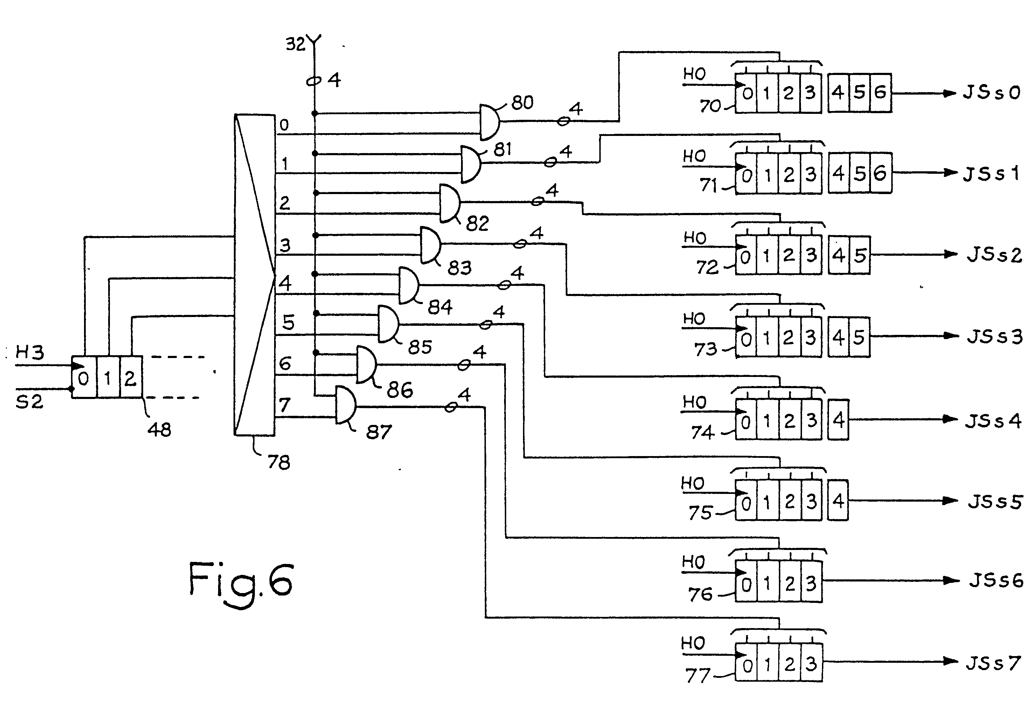

Les problèmes posés par la conversion série-parallèle et parallèle-série dans les conditions du système sont résolus, par exemple, par les convertisseurs représentés schématiquement aux fig. 5 et 6.

La fig. 5 représente un convertisseur série-parallèle 30 qui comporte un ensemble de huit registres à décalage 50 à 57 à entrée série et huit sorties parallèles, dont les entrées sont reliées respectivement aux jonctions JSe0 à JSe7 et dont les entrées d'horloge reçoivent le signal H0. Les registres 50 et 51 comportent huit éléments binaires, les registres 52 et 53 neuf, les registres 54 et 55 dix et les registres 56 et 57 onze, les huit éléments binaires de plus fort poids de chaque registre étant ceux disponibles sur les huit sorties.

Les sorties de chaque registre sont connectées respectivement aux portes logiques «ET» 60 à 67 qui sont chacune la représentation symbolique d'un ensemble de huit portes logiques «ET» et dont les autres entrées sont reliées aux sorties d'un décodeur 58. Ce décodeur 58 a trois entrées reliées respectivement aux sorties n° 0, 1 et 2 du compteur 43 du circuit d'écriture, et, huit sorties n° 0 à 7 reliées respectivement aux portes logiques «ET» 60 à 67, qu'il «ouvre» à tour de rôle cycliquement toutes les 250 ns puisque le compteur 43 reçoit pour signal d'horloge H3 (4 MHz). Une porte logique «OU» 59, représentée symboliquement, a huit fois huit entrées reliées aux huit sorties de chacune des huit portes «ET» 60 à 67 et a huit sorties qui sont reliées à la logique 39 et dont les quatre premières sont également reliées aux entrées du registre 31.

Les informations sont décalées dans les registres 50 à 57 au rythme H0 (2 MHz) de leur arrivée sur les jonctions. Tous les quatre temps élémentaires soit 4×500 ns, un demi-intervalle de temps, c'est-à-dire une information de signalisation est disponible en sortie de chaque registre.

Pendant une première période de 500 ns, le décodeur 58 «ouvre» successivement les portes 60 et 61. A la fin de cette première période un nouveau décalage se produit et les demi-intervalles de temps progressent d'un élément binaire dans chaque registre, des demi-intervalles de temps sont alors disponibles sur les sorties des registres 52 et 53.

Pendant une deuxième période de 500 ns, le décodeur 58 «ouvre» successivement les portes 62 et 63. A la fin de cette deuxième période un nouveau décalage se produit et les demi-intervalles de temps progressent à nouveau d'un élément binaire dans chaque registre, des demi-intervalles de temps sont alors disponibles sur les sorties des registres 54 et 55.

Pendant une troisième période de 500 ns, le décodeur 58 «ouvre» successivement les portes 64 et 65. A la fin de cette troisième période un nouveau décalage se produit et les demi-intervalles de temps progressent à nouveau d'un élément binaire dans chaque registre, des demi-intervalles de temps sont disponibles sur les sorties des registres 56 et 57.

Pendant une quatrième période de 500 ns, le décodeur 58 «ouvre» successivement les portes 66 et 67. A la fin de cette quatrième période un nouveau décalage se produit et les demi-intervalles de temps progressent à nouveau d'un élément binaire dans chaque registre.

A la fin de cette quatrième période, on est en présence de nouveaux demi-intervalles de temps dans les quatre premiers éléments binaires de chaque registre, et on se trouve dans une situation analogue à celle qui précède la première période; et ainsi de suite. D'autre part, en sortie de chaque porte «ET», on a un demi-intervalle de temps disponible toutes les 4×500 ns à destination de la mémoire de signalisation 32 via le registre 31 et en sortie de la porte «OU» 59, on a un demi-intervalle de temps disponible toutes les 250 nanosecondes ($\frac{4\times500\text{ ns}}{8}$) à destination de la mémoire 32, ce qui correspond bien à un rythme de 4 MHz, c'est-à-dire la fréquence de H3.

La fig. 6 représente un convertisseur parallèle-série 33 qui comporte un ensemble de huit registres à décalage 70 à 77 à quatre entrées parallèles et sortie série, dont les sorties sont reliées respectivement aux jonctions JSs0 à JSs7 et dont les entrées d'horloge reçoivent le signal H0. Les registres 70 et 71 comportent sept éléments binaires, les registres 72 et 73 six, les registres 74 et 75 cinq et les registres 76 et 77 quatre, les quatre éléments de plus faible poids n° 0 à 3 de chaque registre étant ceux qui reçoivent les signaux d'entrée.

Les entrées de chaque registre sont reliées respectivement aux sorties de portes logiques «ET» 80 à 87, qui sont chacune la représentation symbolique de quatre portes logiques «ET» et dont les entrées sont reliées d'une part aux sorties de la mémoire de signalisation 32 qui fournit un demi-intervalle toutes les 250 nanosecondes (ns) et d'autre part aux sorties d'un décodeur 78. Ce décodeur 78 a trois entrées reliées aux sorties n° 0 à 2 du compteur 48 du circuit de lecture 38, et, a huit sorties n° 0 à 7 reliées respectivement aux portes logiques «ET» 80 à 87, qu'il «ouvre» à tour de rôle cycliquement toutes les 250 ns puisque le compteur 48 reçoit pour signal d'horloge le signal H3 de fréquence 4 MHz.

Pendant une première période de 500 ns rythme H0 d'émission sur JSs0 à JSs7, le décodeur 78 «ouvre» successivement la porte 80 et la porte 81 ce qui a pour conséquence de mémoriser deux demi-intervalles de temps issus de la mémoire 32 respectivement dans les quatre éléments binaires de plus faible poids n° 0 à 4 des registres 70 et 71. A la fin de cette première période un décalage se produit et les demi-intervalles de temps progressent d'un élément binaire dans chaque registre.

Pendant une deuxième période de 500 ns, le décodeur 78 «ouvre» successivement la porte 82 et la porte 83 ce qui a pour conséquence de mémoriser deux demi-intervalles de temps issus de la mémoire 32 respectivement dans les quatre éléments binaires de plus faible poids N° 0 à 4 des registres 72 et 73. A la fin de cette deuxième période, un décalage se produit et les demi-intervalles de temps progressent à nouveau d'un élément binaire dans chaque registre.

Pendant une troisième période de 500 ns, le décodeur 78 «ouvre» successivement la porte 84 et la porte 85 ce qui a pour conséquence de mémoriser deux demi-intervalles de temps issus de la mémoire 32 respectivement dans les quatre éléments binaires de plus faible poids n° 0 à 4 des registres 74 et 75. A la fin de cette troisième période, un décalage se produit et les demi-intervalles de temps progressent à nouveau d'un élément binaire dans chaque registre.

Pendant une quatrième période de 500 ns, le décodeur 78 «ouvre» successivement la porte 86 et la porte 87 ce qui a pour conséquence de mémoriser deux demi-intervalles de temps respectivement dans les registres 76 et 77.

A la fin de cette quatrième période, un décalage se produit et les demi-intervalles de temps progressent à nouveau d'un élément binaire dans chaque registre, ce qui a pour conséquence d'une part d'obtenir, simultanément sur toutes les jonctions JSs0 à JSs7, le premier élément binaire d'un demi-intervalle de temps disponible en série, d'autre part de libérer les quatre premiers éléments binaires des registres 70 et 71 et de permettre le commencement d'un nouveau cycle puisque l'on est dans une situation analogue à celle qui précède la première période; et ainsi de suite.

## Revendications

1. Système de commutation de signalisation dans un réseau de commutation temporelle, ce réseau étant pourvu d'au moins un calculateur central (2) qui fournit par l'intermédiaire d'un périphérique de marquage (5) des informations de correspondance déterminant chacune la mise en relation d'une voie de parole d'une jonction entrante constituée par une multi-trame de p trames, chaque trame comportant q voies avec une voie de parole d'une jonction sortante ayant la même constitution, étant pourvu d'un réseau de connexion (1) qui permet l'échange de communications entre N jonctions entrantes et N jonctions sortantes (J0 à J(N-1)) et qui fournit et reçoit, sous forme de n jonctions entrantes (JSe) et n jonctions sortantes (JSs) de signalisation, les informations de signalisation contenues respectivement dans les trames des jonctions entrantes et sortantes du réseau à raison de r par jonction (n étant le nombre entier immédiatement supérieur ou égal à $\frac{N}{r}$), et étant également pourvu d'une unité de signalisation (6) qui comporte un microcalculateur (8) relié au calculateur central (2), l'unité de signalisation (6) comportant une logique câblée (9), cette logique ayant d'une part n entrées reliées aux jonctions de signalisation entrantes (JSe) et n sorties reliées aux jonctions de signalisation sortantes (JSs), et d'autre part deux entrées reliées à deux sorties du périphérique de marquage (5) qui lui fournit sur la première entrée l'adresse d'une voie d'une jonction entrante (ITxJe) et sur la seconde entrée l'adresse de la voie de la jonction sortante (ITyJs) avec laquelle la voie de la jonction entrante (ITxJe) est en relation, caractérisé en ce que cette logique câblée (9) comporte:

- un circuit d'entrée (10, 20) dont les n entrées sont reliées aux n jonctions entrantes de signalisation sur lesquelles les informations de signalisation sont transmises en mode série à un rythme H0 et qui fournit les informations de signalisation sur z sorties en parallèle au rythme $\frac{n.H0}{z}$;
- un registre de mémorisation (11, 21) de z éléments binaires dont les z entrées sont reliées aux z sorties du circuit d'entrée, et dont l'entrée d'horloge reçoit un signal d'horloge de fréquence $\frac{n.H0}{z}$;
- une mémoire vive de signalisation (12, 32) de Nxr mots de z éléments binaires dont les z entrées sont reliées aux z sorties du registre de mémorisation et qui reçoit les informations de signalisation;
- un circuit de sortie (13, 33) dont les z entrées sont reliées aux z sorties de la mémoire de signalisation et reçoivent des informations de signalisation en parallèle au rythme $\frac{n.H0}{z}$, et dont les n sorties fournissent les n jonctions sortantes de signalisation sur lesquelles les informations sont transmises en série au rythme H0;
- un multiplexeur d'adressage (14, 34) dont les sorties sont reliées aux m entrées d'adressage de la mémoire de signalisation avec m égal à $\log_2$ (Nxr);
- un registre d'adresse d'écriture (15, 35) dont les m sorties sont reliées aux entrées du multiplexeur d'adressage qui correspondent à l'écriture;
- un circuit d'adressage en écriture (17, 37) dont les entrées sont reliées aux sorties du circuit d'entrée et dont les m sorties sont reliées au registre d'adresse d'écriture, comportant:
- des moyens (19-21, 39-41) de détection de perte et reprise de verrouillage de multitrame constitués d'une part par un circuit logique (19, 39) dont huit entrées sont reliées aux sorties du circuit d'entrée (10, 30), dont quatre sorties sont reliées à une première partie des entrées d'un multiplexeur (21, 41) d'entrée de rang de trame et dont une cinquième sortie est reliée à l'entrée de commande de ce multiplexeur, d'autre part par une mémoire vive (20, 40) de N mots de quatre éléments binaires dont les quatre entrées et les quatre sorties sont reliées respectivement à quatre sorties et quatre entrées du circuit logique (19, 39),
- des moyens (20-22, 40-42) de mémorisation du rang de trame sur chaque jonction de signalisation entrante, constitués par une mémoire (20, 40) vive de N mots de quatre éléments binaires dont les entrées sont reliées aux sorties du multiplexeur (21, 41) d'entrée de rang de trame et dont les quatre sorties sont reliées aux quatre entrées du registre d'adresse d'écriture (15, 35) qui correspondent aux quatre éléments binaires de plus fort poids,
- des moyens d'incrémentation (22, 42) du rang dont les entrées sont reliées aux sorties des moyens de mémorisation et dont les sorties sont reliées à la seconde partie des entrées du multiplexeur (21, 41) d'entrée de rang de trame,
- des moyens (23, 43) de comptage de demi-voies entrantes, constitués par un compteur (23, 43) à (m-4) éléments binaires qui reçoit un signal de synchronisation avec les jonctions entrantes de signalisation provenant du réseau de connexion, dont l'entrée d'horloge reçoit un signal d'horloge de fréquence $\frac{n.H0}{z}$, c'est-à-dire n.500 kHz, et dont les (m-4) sorties sont reliées aux (m-4) entrées de plus faible poids du registre d'adresse d'écriture (15, 35), les (m-5) sorties de plus faible poids étant également reliées d'une part aux entrées d'adressage de la mémoire (20, 40) des moyens de détection de perte et reprise de verrouillage de multitrame, d'autre part aux entrées d'adressage des moyens de mémorisation de rang de trame;
- un registre d'adresse de lecture (16, 36) dont les m sorties sont reliées aux entrées du multiplexeur d'adressage qui correspondent à la lecture;- un circuit d'adressage en lecture (18, 38) dont les entrées sont reliées aux périphériques de marquage (5) et dont les m sorties sont reliées aux entrées du registre d'adresse de lecture (16, 36), comportant:
- des moyens (25, 45) de mémorisation de l'adresse d'une voie d'une jonction entrante (ITx-Je), constitués par un registre de mémorisation de m éléments binaires dont les m entrées sont reliées au périphérique de marquage (5) les cinq entrées de plus fort poids recevant l'adresse de la voie (ITx), les (m-5) entrées de plus faible poids recevant l'adresse de la jonction (Je),
- des moyens (26, 46) de mémorisation de l'adresse de la voie de la jonction sortante (ITyJs) avec laquelle la voie de la jonction entrante (ITx-Je) est en relation, ces moyens étant constitués par un registre (26, 46) de mémorisation de m éléments binaires dont les m entrées sont reliées au périphérique de marquage les cinq entrées de plus fort poids recevant l'adresse de la voie (ITy), les (m-5) entrées de plus faible poids recevant l'adresse de la jonction (Js),

- des moyens (24, 44) de mémorisation d'adresse constitués par une mémoire vive (24, 44) de Nxr mots de m éléments binaires dont les sorties sont reliées aux m entrées du registre d'adresse de lecture (16, 36) et dont les entrées sont reliées aux sorties du registre (25, 45) de mémorisation d'adresse de la voie (ITxJe), la $i^{ième}$ sortie de ce registre étant reliée à la (i+1) modulo $m^{ième}$ entrée de la mémoire, les entrées et respectivement les sorties étant numérotées de 0 à (m-1) en partant de celle de poids le plus faible jusqu'à celle de poids le plus fort,
- un multiplexeur d'adressage (27, 47) des moyens de mémorisation d'adresse dont les m sorties sont reliées aux m entrées d'adressage des moyens de mémorisation d'adresse et dont une première partie des entrées est reliée aux m sorties des registres (26, 46) de mémorisation (ITyJs), la $i^{ième}$ sortie de ce registre étant reliée à l'entrée correspondant à la (i+1) modulo $m^{ième}$ entrée d'adressage, les entrées et respectivement les sorties étant numérotées de 0 à (m-1) en partant de celle de poids le plus faible jusqu'à celle de poids le plus fort,
- des moyens (28, 48) de comptage des demi-voies sortantes, constitués par un compteur (28, 48) à m éléments binaires qui reçoit un signal de synchronisation des jonctions sortantes provenant du réseau de connexion, dont l'entrée d'horloge reçoit un signal d'horloge de fréquence $\frac{n.H0}{2}$, c'est-à-dire nx 500 kHz, et dont les m sorties sont reliées à la seconde partie des entrées du multiplexeur d'adressage (27, 47) des moyens de mémorisation d'adresse, la $i^{ième}$ sortie étant reliée à la $i^{ième}$ entrée avec i variant de 0 à (m-1).

2. Système selon la revendication 1, caractérisé en ce qu'une mémoire vive de N mots de huit éléments binaires contient la mémoire des moyens de détection de perte et reprise de verrouillage de trame et la mémoire de rang de trame.

3. Système selon la revendication 1, dans lequel N est égal à 32 et n à 1 et, par conséquent, Nxr est égal à 1024 et m à 10, caractérisé en ce que le circuit d'entrée est un registre à décalage (10) de huit éléments binaires à entrée série et huit sorties parallèles dont l'entrée d'horloge reçoit un signal d'horloge à 2 MHz, dont l'entrée est reliée à la jonction de signalisation entrante (JSe) et, dont les sorties sont reliées aux moyens de détection de perte et reprise de verrouillage de multitrame, les quatre premières d'entre elles étant également reliées aux entrées du registre (11) de mémorisation d'entrée de la mémoire de signalisation (12) et en ce que le circuit de sortie est un registre à décalage (13) de quatre éléments binaires à entrées parallèles reliées aux sorties de la mémoire de signalisation et à sortie série reliée à la jonction de signalisation sortante (JSs), l'entrée d'horloge recevant le signal d'horloge à 2 MHz.

4. Système selon la revendication 1, dans lequel N est égal à 256 et n à 8 et, par conséquent, Nxr est égal à 4096 et m à 13, caractérisé en ce que le circuit d'entrée est un convertisseur série-parallèle constitué par:

- un ensemble de huit registres à décalage (50 à 57) à entrée série et sorties parallèle qui reçoivent un signal d'horloge à 2 MHz et dont les entrées sont reliées respectivement aux jonctions de signalisation entrantes (JSe0 à JSe7), les deux premiers registres (50, 51) comportant huit éléments binaires, le troisième et le quatrième (52, 53) neuf, le cinquième et le sixième (54, 55) dix, le septième et le huitième (56, 57) onze,
- un décodeur (58) dont les trois entrées sont reliées aux trois sorties de plus faible poids du compteur (43) du circuit d'adressage en écriture,
- huit ensembles (60 à 67) de huit portes logiques «ET», chacun d'eux étant relié d'une part aux huit sorties, c'est-à-dire aux huit éléments binaires de plus fort poids, de l'un des huit registres à décalage et d'autre part à la sortie correspondante du décodeur,
- une logique «OU» (59) dont les huit fois huit entrées sont reliées aux huit sorties de chacun des huit ensembles de portes «ET» et dont les huit sorties sont reliées d'une part au circuit d'adressage en écriture (37), d'autre part à la mémoire de signalisation (32) pour quatre d'entre elles, et en ce que le circuit de sortie est un convertisseur parallèle-série constitué par:
- un décodeur (78) dont les trois entrées sont reliées aux trois sorties de plus faible poids du compteur du circuit d'adressage en lecture,
- huit ensembles (80 à 87) de quatre portes logiques «ET» chacun d'eux étant relié d'une part aux quatre sorties de la mémoire de signalisation, d'autre part à l'une des huit sorties du décodeur,
- un ensemble de huit registres à décalage (70 à 77) numérotés de 0 à 7 à entrées parallèles et sortie série, qui reçoivent un signal d'horloge à 2 MHz, les deux premiers registres n° 0 et 1 comportant sept éléments binaires, le troisième et le quatrième n° 2 et 3 six, le cinquième et le sixième n° 4 et 5 cinq, le septième et le huitième n° 6 et 7 quatre, les quatre entrées, c'est-à-dire les quatre éléments binaires de plus faible poids, du registre n° i (i = 0 à 7) étant reliées aux quatre sorties de l'ensemble de porte «ET» qui est relié à la sortie du décodeur qui correspond au décodage de i en code binaire et la sortie du registre n° i étant reliée à la $i^{ième}$ jonction de signalisation sortante (JSsi).

5. Réseau de commutation temporelle, caractérisé en ce qu'il comporte un système selon l'une quelconque des revendications 1 à 4.

**Patentansprüche**

1. Durchschaltungssystem für die Vermittlungssignale in einem Zeitschaltnetz, das mindestens einen zentralen Rechner (2) besitzt, der über ein peripheres Markiergerät Korrespondenzinformationen liefert, die je die Verbindung von einem Sprechkanal eines eingehenden Anschlusses, bestehend aus einem p Rahmen enthaltenden Vielfachrahmen, wobei jeder Rahmen q Kanäle enthält, mit einem Sprechkanal eines ausgehenden Anschlusses gleichen Aufbaus herstellt, wobei das Zeitschaltnetz weiter ein Verbindungsnetz (1) besitzt, über das Nachrichten zwischen N eingehenden und N ausgehenden Anschlüssen (J0 bis J(N-1)) austauschbar sind und das in Form von n eingehenden (JSe) und n ausgehenden Signalisationsanschlüssen (JSs) die in den Rahmen der eingehenden bzw. ausgehenden Anschlüsse des Netzes enthaltenen Signalisationsinformationen liefert und zugeführt erhält, und zwar r pro Anschluss (n ist die ganze Zahl, die unmittelbar grösser oder gleich $\frac{N}{r}$ ist), und wobei das Zeitschaltnetz eine Signalisationseinheit (6) besitzt, die einen mit dem zentralen Rechner (2) verbundenen Mikrorechner (8) aufweist sowie eine festverdrahtete Logik (9), die einerseits n mit den eingehenden Signalisationsanschlüssen (JSe) verbundene Eingänge und n mit den ausgehenden Signalisationsanschlüssen (JSs) verbundene Ausgänge und andererseits zwei mit zwei Ausgängen des peripheren Markiergeräts (5) verbundene Eingänge aufweist, wobei dieses Gerät der Logik über einen ersten Eingang die Adresse eines Kanals eines eingehenden Anschlusses (ITxJe) und über den zweiten Eingang die Adresse des Kanals des ausgehenden Anschlusses (ITyIs) zuführt, mit dem der Kanal des eingehenden Anschlusses (ITxJe) in Verbindung steht, dadurch gekennzeichnet, dass die festverdrahtete Logik (9) enthält

- einen Eingangsschaltkreis (10, 20), dessen n Eingänge an die n eingehenden Signalisationsanschlüsse, an die die Signalisationsinformationen in Serie mit einem Takt H0 übertragen werden, angeschlossen sind und der die Signalisationsinformationen auf z Ausgängen parallel im Takt $\frac{n.H0}{z}$ ausgibt;
- ein Speicherregister (11, 21) mit z Binärelementen und z Eingängen, die an die z Ausgänge des Eingangsschaltkreises angeschlossen sind, und mit einem Takteingang, der ein Taktsignal der Frequenz $\frac{n.H0}{z}$ empfängt,
- einen Signalisations-Lebendspeicher (12, 32) eines Umfangs von Nxr aus z Binärelementen bestehenden Wörtern, dessen z Eingänge an die z Ausgänge der Speicherregister angeschlossen sind und der die Signalisationsinformationen zugeführt erhält;
- einen Ausgangsschaltkreis (13, 33), dessen z Eingänge an die z Ausgänge des Signalisationsspeichers angeschlossen sind und die Signalisationsinformationen parallel im Rhythmus n.H0/z zugeführt erhalten, und dessen n Ausgänge die n ausgehenden Signalisationsanschlüsse liefern, über die die Informationen in Serie im Rhythmus H0 übertragen werden;
- einen Adressenmultiplexer (14, 34), dessen Ausgänge an die m Adresseneingänge des Signalisationsspeichers angelegt sind, wobei m gleich $\log_2(Nxr)$ ist;
- ein Schreibadressenregister (15, 35), dessen m Ausgänge mit den Eingängen des Adressenmultiplexers verbunden sind, die dem Schreibvorgang entsprechen;
- einen Schreibadressierschaltkreis (17, 37), dessen Eingänge an die Ausgänge des Eingangsschaltkreises angeschlossen sind und dessen m Ausgänge mit dem Schreibadressenregister verbunden sind und der enthält:
- Mittel (19–21, 39–41) zur Detektion des Verlusts und der Wiedergewinnung der Vielfachrahmenverriegelung, die einerseits aus einem logischen Schaltkreis (19, 39) gebildet werden, dessen acht Eingänge an die Ausgänge des Eingangsschaltkreises (10, 30) angeschlossen sind und von dem vier Ausgänge an einen ersten Teil von Eingängen eines Eingangsmultiplexers (21, 41) für den Rahmenrang und ein fünfter Ausgang an den Steuereingang dieses Multiplexers angeschlossen sind, und andererseits aus einem Lebendspeicher (20, 40) einer Kapazität von N Wörtern von je vier Binärelementen gebildet werden, dessen vier Eingänge und vier Ausgänge an vier Ausgänge bzw. vier Eingänge des logischen Schaltkreises (19, 39) angeschlossen sind,
- Mittel (20–22, 40–42) zur Speicherung des Rahmenrangs auf jedem ankommenden Signalisationsanschluss, die aus einem eine Kapazität von N Wörtern von je vier Binärelementen aufweisenden Speicher gebildet werden, dessen Eingänge an die Ausgänge des Eingangsmultiplexers (21, 41) für den Rahmenrang und dessen vier Ausgänge an die vier Eingänge des Schreibadressenregisters (15, 35), die den vier Binärelementen höchster Wichtung entsprechen, angeschlossen sind,
- Ranginkrementiermittel (22, 42), deren Eingänge mit den Ausgängen der Speichermittel und deren Ausgänge mit dem zweiten Teil der Eingänge des Eingangsmultiplexers (21, 41) für den Rahmenrang verbunden sind,
- Mittel (23, 43) zum Zählen der eingehenden Halbkanäle, bestehend aus einem Zähler (23, 43) mit (m-4) Binärelementen, dem ein Synchronisationssignal mit den eingehenden Signalisationsanschlüssen vom Vermittlungsnetz zugeführt wird, während der Takteingang ein Taktsignal der Frequenz n.H0/z, d.h. von n.500 kHz zugeführt erhält und die (m-4) Ausgänge an die (m-4) Eingänge geringerer Wichtung des Schreibadressenregisters (15, 35) angeschlossen sind, wobei die (m-5) Ausgänge geringerer Wichtung ebenfalls einerseits mit den Adressiereingängen des Speichers (20, 40) der Mittel zur Erkennung des Verlustes und der Wiedergewinnung der Vielfachrahmenverriegelung und andererseits mit den Adressiereingängen der Speichermittel für den Rahmenrang verbunden sind;
- ein Leseadressenregister (16, 36), dessen m Ausgänge mit den Eingängen des Adressiermultiplexers, die dem Lesevorgang entsprechen, verbunden sind;
- einen Leseadressierschaltkreis (18, 38), dessen Eingänge an die peripheren Markiergeräte (5) und dessen m Ausgänge an die Eingänge des Leseadressenregisters (16, 36) angeschlossen sind und der enthält:
- Mittel (25, 45) zur Speicherung der Adresse eines Kanals eines eingehenden Anschlusses (ITxJE), bestehend aus einem Speicherregister mit m Binärelementen, dessen m Eingänge an das periphere Markiergerät (5) angeschlossen sind, wobei die fünf Eingänge höherer Wichtung die Adresse des Kanals (ITx) und die (m-5) Eingänge geringerer Wichtung die Adresse des Anschlusses (je) zugeführt erhalten,
- Mittel (26, 46) zur Speicherung der Adresse des Kanals des ausgehenden Anschlusses (ITyJs), mit dem der Kanal des eingehenden Anschlusses (ITxJe) in Verbindung steht, wobei diese Mittel aus einem Speicherregister (26, 46) mit m Binärelementen gebildet werden, dessen m Eingänge an das periphere Markiergerät angeschlossen sind und wobei die fünf Eingänge höherer Wichtung die Kanaladresse (ITy) zugeführt erhalten und die (m-5) Eingänge geringerer Wichtung die Adresse des Anschlusses (Js) zugeführt erhalten,
- Adressenspeichermittel (24, 44), die aus einem Lebendspeicher (24, 44 einer Kapazität von Nxr Wörtern mit je m Binärelementen gebildet werden und deren Ausgänge an die m Eingänge des Leseadressenregisters (16, 36) angeschlossen sind, während die Eingänge an die Ausgänge des Kanaladressenspeicherregisters (Adresse ITxJe) (25, 45) angeschlossen sind, wobei der i-te Ausgang dieses Registers mit dem [(i+1) modulo m]-ten Eingang des Speichers verbunden sind und die Eingänge bzw. Ausgänge von 0 bis (m-1) ausgehend von der Stelle geringster Wichtung bis zur Stelle höchster Wichtung durchnumeriert sind,
- einen Adressenmultiplexer (27, 47) für die Adressenspeichermittel, dessen m Ausgänge an die m Adresseneingänge der Adressenspeichermittel und dessen erster Teil von Eingängen an die m Ausgänge der Speicherregister (26, 46) (ITyJs) so angeschlossen sind, dass der i-te Ausgang dieses Registers an den Eingang angeschlossen ist, der dem [(i+1) modulo m]-ten Adresseneingang entspricht, wobei auch hier die Eingänge bzw. Ausgänge von 0 bis (m-1) ausgehend von der Stelle geringster Wichtung bis zur Stelle höchster Wichtung durchnumeriert sind,
- Mittel (28, 48) zur Zählung der ausgehenden Halbkanäle, die aus einem Zähler (28, 48) mit m Binärelementen bestehen, der ein Synchronisationssignal für die ausgehenden Anschlüsse vom Vermittlungsnetz zugeführt erhält, dessen Takteingang ein Taktsignal der Frequenz n.H0/z, d.h. nx 500 kHz empfängt und dessen m Ausgänge an den zweiten Teil der Eingänge des Adressenmultiplexers (27, 47) der Adressenspeichermittel angeschlossen sind, wobei der i-te Ausgang mit dem i-ten Eingang verbunden ist und i von 0 bis (m-1) variiert.

2. System nach Anspruch 1, dadurch gekennzeichnet, dass ein Lebendspeicher einer Kapazität von N Wörtern mit je acht Binärelementen den Speicher der Mittel zur Entdeckung des Verlustes und der Wiedergewinnung der Rahmenverriegelung sowie den Speicher für den Rahmenrang enthält.

3. System nach Anspruch 1, in dem N gleich 32 und n gleich 1 ist und daher Nxr gleich 1024 und m gleich 10 ist, dadurch gekennzeichnet, dass der Eingangsschaltkreis ein Schieberegister (10) mit acht Binärelementen, einem Serieneingang und acht parallelen Ausgängen ist, dessen Takteingang ein Taktsignal der Frequenz 2 MHz empfängt, dessen Eingang an den eingehenden Signalisationsanschluss (JSe) und dessen Ausgänge an die Mittel zur Entdeckung des Verlustes und der Wiedergewinnung der Vielfachrahmenverriegelung angeschlossen sind, wobei die vier ersten Ausgänge ausserdem mit den Eingängen des Eingangsspeicherregisters (11) des Signalisationsspeichers (12) verbunden sind, und dass der Ausgangsschaltkreis ein Schieberegister (13) mit vier Binärelementen, parallelen mit den Ausgängen des Signalisationsspeichers verbundenen Eingängen und einem Serienausgang ist, der an den ausgehenden Signalisationsanschluss (JSs) angeschlossen ist, wobei der Takteingang ein Taktsignal der Frequenz 2 MHz empfängt.

4. System nach Anspruch 1, in dem N gleich 256 und n gleich 8 ist und daher Nxr gleich 4096 und m gleich 13 ist, dadurch gekennzeichnet, dass der Eingangsschaltkreis ein Serien-Parallel-Wandler ist, der aus
- einer Gruppe von acht Schieberegistern (50 bis 57) mit einem Serieneingang und parallelen Ausgängen, die ein Taktsignal von 2 MHz empfangen und deren Eingänge an die eingehenden Signalisationsanschlüsse (JSe0 bis JSe7) angeschlossen sind, wobei die ersten beiden Register (50, 51) acht Binärelemente, das dritte und das vierte Register (52, 53), neun Binärelemente, das fünfte und das sechste Register (54, 55) zehn Binärelemente, das siebte und das achte Register (56, 57) elf Binärelemente umfasst,
- einem Dekoder (58), dessen drei Eingänge mit den drei Ausgängen geringerer Wichtung des Zählers (43) des Schreibadressierschaltkreises verbunden sind,
- acht Gruppen von acht logischen UND-Toren (60 bis 67) von denen jede einerseits an die acht Ausgänge, d.h. an die acht Binärelemente grösserer Wichtung eines der acht Schieberegister angeschlossen ist und andererseits an den entsprechenden Ausgang des Dekoders,
- einer ODER-Logik (59) besteht, deren acht mal acht Eingänge an die acht Ausgänge jeder der acht Gruppen von UND-Toren und deren acht Ausgänge einerseits an den Schreibadressierschaltkreis (37) und andererseits an den Signalisationsspeicher (32) für vier von ihnen angeschlossen sind,
und dass der Ausgangsschaltkreis ein Parallel-Serien-Wandler ist, der aus
- einem Dekoder (78), dessen drei Eingänge an die drei Ausgänge geringerer Wichtung des Zählers des Leseadressierschaltkreises angeschlossen sind,
- acht Gruppen (80 bis 87) von vier logischen UND-Toren, von denen jede einerseits an die vier Ausgänge des Signalisationsspeichers und andererseits an einen der acht Ausgänge des Dekoders angeschlossen ist,
- einer Gruppe von acht Schieberegistern (70 bis 77) besteht, die von 0 bis 7 durchnumeriert sind, parallele Eingänge und einen Serienausgang besitzen und ein Taktsignal mit der Frequenz 2 MHz zugeführt erhalten, wobei die beiden ersten Register, Nummer 0 und Nummer 1, sieben Binärelemente, das dritte und das vierte Register, Nummer 2 und Nummer 3, sechs Binärelemente, das fünfte und das sechste Register, Nummer 4 und Nummer 5, fünf Binärelemente, das siebte und das achte Register, Nummer 6 und Nummer 7, vier Binärelemente umfassen, und die vier Eingänge, d.h. die vier Binärelemente geringerer Wichtung des Registers Nr. i (i von 0 bis 7) an die vier Ausgänge der Gruppe von UND-Toren angeschlossen sind, die mit dem Ausgang des Dekoders verbunden ist, welcher der Dekodierung der Zahl i im Binärkode entspricht, während der Ausgang des Registers i mit dem i-ten ausgehenden Signalisationsanschluss (JSsi) verbunden ist.

5. Zeitschaltnetz, dadurch gekennzeichnet, dass es ein System nach einem der Ansprüche 1 bis 4 enthält.

**Claims**

1. A signalisation switching system in a time division switching network, this network being provided with at least one central computer (2) which furnishes via a peripheral marking unit (5) correspondence informations each determining the establishment of a relation between a speech channel of an incoming junction and a speech channel of an outgoing junction of identical constitution, each junction being constituted by a multiframe of p frames and each frame comprising q channels, the network being moreover provided with a connection network (1) which allows the exchange of communications between N incoming junctions and N outgoing junctions (J0 to J(N-1)) and which furnishes and receives, via n incoming (Jse) and n outgoing signalisation junctions (JSs), the signalisation informations (r informations per junction) contained respectively in the frames of the incoming and outgoing junctions of the network (n being an integer equal or immediately superior to N/r), and being provided with a signalisation unit (6) which comprises a microcomputer (8) connected to the central computer (2) and which comprises a wired logic (9), n inputs of which on the one hand are connected to the incoming signalisation junctions (JSe) and n outputs of which are connected to the outgoing signalisation junctions (JSs), and two inputs of which on the other hand are connected to two outputs of the peripheral marking unit (5) which delivers to the first of said inputs the address of a channel in an incoming junction (ITxJe) and to the second of said inputs the address of the channel in the outgoing junction (ITyJS) with which the channel of the incoming junction (ITxJe) is in relation, characterized in that wired logic (9) comprises:

- an input circuit (10, 20), the n inputs of which are connected to the n incoming signalisation junctions on which the signalisation informations are transmitted in a series mode at a rythm H0, this circuit furnishing the signalisation informations via z parallel outputs at a rythm n.H0/z;
- a memorization register (11, 21) having z binary elements, the z inputs of which are connected to the z outputs of the input circuit and the clock input of which receives a clock signal at a frequency n.H0/z;
- an active signalisation memory (12, 32) of a capacity of Nxr words, each having z binary elements, the z inputs of this memory being connected to the z outputs of the memorization register and receiving the signalisation informations;
- an output circuit (13, 33), the z inputs of which are connected to the z outputs of the signalisation memory and receive parallelly the signalisation informations at a clock rythm n.H0/z, whereas the n outputs furnish the n outgoing signalisation junctions on which the informations are transmitted serially at a rythm H0;
- an address multiplexer (14, 34), the outputs of which are connected to m address inputs of the signalisation memory, m being equal to $\log_2(Nxr)$;
- a write address register (15, 35), the m outputs of which are connected to the inputs of the address multiplexer which corresponds to the writing process;
- a write adress circuit (17, 37), the inputs of which are connected to the outputs of the input circuit and the m outputs of which are connected to the write adress register, this circuit comprising:
- means (19-21, 39-41) for detecting the loss and recovery of the multiframe locking state, constituted on the one hand by a logic circuit (19, 39), eight inputs of which are connected to the outputs of the input circuit (10, 30), four outputs of which are connected to a first part of inputs of an input multiplexer (21, 41) concerning the rank of the frame, and a fifth output of which is connected to the control input of this multiplexer, and constituted on the other hand by an active memory (20, 40) of a capacity of N words of four binary elements each, the four inputs and the four outputs of which are respectively connected to four outputs and four inputs of the logic circuit (19, 39),
- means (20-22, 40-42) for storing the rank of the frame on each incoming signalisation junction, constituted by an active memory (20, 40) of a capacity of N words of four binary elements each, the inputs of which are connected to the outputs of the input multiplexer (21, 41) concerning the rank of the frame, and the four outputs of which are connected to the four inputs of the write address register (15, 35), which correspond to the four binary elements of the heaviest weight,
- means (22, 42) for incrementing the rank, the inputs of which are connected to the outputs of the memorization means and the outputs of which are connected to a second part of inputs of the input multiplexer (21, 41) concerning the rank of the frame,
- means (23, 43) for counting the incoming half- channels, constituted by a counter (23, 43) having (m-4) binary elements and receiving a synchronisation signal together with the incoming signalisation junctions coming from the connection network, the clock inputs of this counter receiving a clock signal of a frequency n.H0/z, i.e. n.500 kHz, the (m-4) outputs being connected to the (m-4) inputs of the lowest weight of the write address register (15, 35), the (m-5) outputs of the lowest weight being equally connected on the one hand to the address inputs of the memory (20, 40) included in the means for detecting the loss and recovery of the multiframe locking state, on the other hand to the address inputs of the memorization means concerning the rank of the frame;
- a read address register (16, 36), the m outputs of which are connected to the inputs of the address multiplexer which correspond to the reading process;
- a read address circuit (18, 38), the inputs of which are connected to the peripheral marking units (5) and the m outputs of which are connected to the inputs of the read address register (16, 36), this circuit comprising:
- means (25, 45) for storing the address of a channel of an incoming junction (ITxJe), constituted by a memorization register having m binary elements and m inputs which are connected to the peripheral marking unit (5), the five inputs of heavier weight receiving the address of the channel (ITx), the (m-5) inputs of lower weight receiving the address of the junction (Je),
- means (26, 46) for storing the address of the channel of the outgoing junction (ITyJs) which is in relation with the channel of the incoming junction (ITxJe), these means being constituted by a memorization register (26, 46) having m binary elements and m inputs which are connected to the peripheral marking unit, the five inputs of heavier weight receiving the channel address (ITy), the (m-5) inputs of lower weight receiving the junction address (Js),
- means (24, 44) for storing the address, constituted by an active memory (24, 44) of a capacity of Nxr words of m binary elements each, the outputs of which are connected to m inputs of the read address register (16, 36) and the inputs of which are connected to the outputs of the memorization register (25, 45) which stores the address of the channel (ITxJe), the output number i of this register being connected to the input number [(i+1) modulo m] of the memory, the inputs and outputs are respectively numbered 0 to (m-1) beginning at the lowest weight and proceeding up to the heaviest weight,
- an address multiplexer (27, 47) of the address memorization means, the m outputs of which are connected to the m address inputs of the address memorization means and a first part of inputs of which is connected to the m outputs of the memorization registers (ITyJs) (26, 46), the output number i of this register being connected to the input which corresponds to the address input number [(i+1) modulo m], the inputs and outputs are numbered respectively from 0 to (m-1) beginning with the lowest weight and extending up to the heaviest weight,
- means (28, 48) for counting the outgoing half-channels, constituted by a counter (28, 48) having m binary elements and receiving a synchronisation signal for the outgoing junctions coming from the connection network, the clock input of this counter receiving a clock signal of a frequency n.H0/z, i.e. nx 500 kHz, and the m outputs being connected to the second part of inputs of the address multiplexer (27, 47) contained in the address memorization means, the output number i being connected to the input number i, i varying from 0 to (m-1).

2. A system according to claim 1, characterized in that the active memory of a capacity of N words with eight binary elements each contains the memory of the means for detecting the loss and recovery of the frame locking status and the memory concerning the rank of the frame.

3. A system according to claim 1, in which N is equal to 32 and n is equal to 1 and consequently Nxr is equal to 1024 and m is equal to 10, characterized in that the input circuit is constituted by a shift register (10) having eight binary elements, a series input and eight parallel outputs, the clock input receiving a clock signal of 2 MHz and the inputs being connected to the incoming signalisation junction (JSe) and the outputs being connected to the means for detecting the loss and recovery of the multiframe locking status, the first four outputs being equally connected to the inputs of the input memorization register (11) of the signalisation memory (12), and characterized in that the output circuit is constituted by a shift register (13) having four binary elements, the parallel inputs of which are connected to the outputs of the signalisation memory and a series output of which is connected to the outgoing signalisation junction (JSs), the clock input receiving the clock signal of 2 MHz.

4. A system according to claim 1, in which N is equal to 256 and n is equal to 8 and consequently Nxr is equal to 4096 and m is equal to 13, characterized in that the input circuit is a converter from series to parallel configuration and is constituted by:
- a group of eight shift registers (50 to 57) each having a series input and parallel outputs and receiving a clock signal of 2 MHz, the inputs of which are respectively connected to the incoming signalisation junctions (JSe0 to JSe7), the first two registers (50, 51) comprising eight binary elements, the third and fourth registers (52, 53) comprising nine binary elements, the fifth and sixth registers (54, 55) comprising ten binary elements and the seventh and eighth registers (56, 57) comprising eleven binary elements,
- a decoder (58) having three inputs which are connected to the three outputs of lowest weight of the counter (43) contained in the write address circuit,
- eight groups (60 to 67) of eight logic AND gates, each gate being connected on the one hand to the eight outputs, i.e. to the eight binary elements of heavier weight, of one out of the eight shift registers and on the other hand to the corresponding output of the decoder,
- an OR logic (59), the eight times eight inputs of which are connected to eight outputs of each of the eight groups of AND gates, and the eight outputs of which are connected on the one hand to the write address circuit (37) and on the other hand to the signalisation memory (32) for four of them, and characterized in that the output circuit is a converter from the parallel to the series configuration and is constituted by:
- a decoder (78), the three inputs of which are connected to the three outputs of lower weight of the counter contained in the read address circuit,
- eight groups (80 to 87) of four logic AND gates, each gate being connected on the one hand to the four outputs of the signalisation memory and on the other hand to one of the eight outputs of the decoder,
- a group of eight shift registers (70 to 77) numbered from 0 to 7 and having parallel inputs and a series output, receiving a clock signal at 2 MHz, the first two registers, number 0 and 1, comprising seven binary elements, the third and fourth registers, number 2 and 3, comprising six binary elements, the fifth and sixth registers, number 4 and 5, comprising five binary elements, the seventh and eighth register, number 6 and 7, comprising four binary elements, the four inputs, i.e. the four binary elements of lower weight of the register number i (i going from 0 to 7) being connected to four outputs of the group of AND gates which is connected to the decoder output corresponding to the decodation of i in binary code, the output of the register number i being connected to the outgoing signalisation junction number i (JSsi).

5. A time division network characterized in that it comprises a system according to any one of claims 1 to 4.

J0
J(N-1)
1
5
2
4
3
JSe
S1
S2
JSs
ITxJe
ITyJs
9
8
6
7
Fig.1
Fig.3
I
A
B
C
D
E
II
+
−

Fig.2
10
H0
JSe
17
19
4
4
4
4
4
11
H1
H2
E/L
15
12
E/L
20
21
4
AD
4
10
6
5
22
4
S1
0 1 2 3 4 5
23
H1
AD
H1
24
9 8 7 6 5 4 3 2 1 0
ITx
Je
10
14
AD
E/L
25
16
H1
10
26
H0
JSs
13
27
ITy
18
H1
10
10
Js
S2
H1
0 1 2 3 4 5 6 7 8 9
28

Fig.4
JS e0
JS e1
JS e2
JS e3
JS e4
JS e5
JS e6
JS e7
H0
43
30
4
4
31
H3
32
AD
34
35
H3
36
H3
33
JS s0
JS s1
JS s2
JS s3
JS s4
JS s5
JS s6
JS s7
H0
48
37
39
H0
E/L
40
41
AD
4
9
42
S1
H3
0 1 2 3 4 5 6 7 8
43
44
13
13
AD E/L
47
H3
45
ITx
Je
46
ITy
Js
13
13
38
S2
H3
0 1 2 3 4 5 6 7 8 9 10 11 12
48

Fig.5
H0
JSe0
50
0 1 2 3 4 5 6 7
H0
JSe1
51
H0
JSe2
52
0 1 2 3 4 5 6 7 8
H0
JSe3
53
H0
JSe4
54
0 1 2 3 4 5 6 7 8 9
H0
JSe5
55
H0
JSe6
56
0 1 2 3 4 5 6 7 8 9 10
H0
JSe7
57
60
61
62
63
64
65
66
67
58
59
8
4
H3
S1
43
39
31

32
H3
S2
48
78
80
81
82
83
84
85
86
87
HO
70
71
72
73
74
75
76
77
JSs0
JSs1
JSs2
JSs3
JSs4
JSs5
JSs6
JSs7


Fig.6